(19) **Europäisches Patentamt**

**European Patent Office**

**Office européen des brevets**

(11) **EP 0 724 490 B1**

(12) **EUROPÄISCHE PATENTSCHRIFT**

(45) Veröffentlichungstag und Bekanntmachung des Hinweises auf die Patenterteilung:
**08.03.2000 Patentblatt 2000/10**

(21) Anmeldenummer: **95930478.3**

(22) Anmeldetag: **17.08.1995**

(51) Int Cl.[7]: **B07C 3/00**

(86) Internationale Anmeldenummer:
**PCT/EP95/03263**

(87) Internationale Veröffentlichungsnummer:
**WO 96/05919 (29.02.1996 Gazette 1996/10)**

(54) **LOGISTIKNETZ UND VERFAHREN ZUR STEUERUNG EINES LOGISTIKNETZES**

LOGISTICAL NETWORK AND METHOD OF CONTROLLING A LOGISTICAL NETWORK

RESEAU LOGISTIQUE ET PROCEDE DE COMMANDE D'UN RESEAU LOGISTIQUE

(84) Benannte Vertragsstaaten:
**CH DE FR GB IT LI NL**

(30) Priorität: **19.08.1994 DE 4429469**

(43) Veröffentlichungstag der Anmeldung:
**07.08.1996 Patentblatt 1996/32**

(73) Patentinhaber: **SIEMENS AKTIENGESELLSCHAFT**
**80333 München (DE)**

(72) Erfinder:
- **BELITZ, Beate**
  **D-12557 Berlin (DE)**
- **BERENDS, Andreas**
  **D-10405 Berlin (DE)**
- **EYCHMÜLLER, Tobias**
  **D-78462 Konstanz (DE)**
- **KREITMEIER, Franz**
  **D-78462 Konstanz (DE)**

(56) Entgegenhaltungen:
EP-A- 0 500 180        US-A- 5 068 797
US-A- 5 072 401        US-A- 5 287 271

**Beschreibung**

Die Erfindung betrifft ein Logistiknetz und ein Verfahren zur Steuerung eines Logistiknetzes gemäß dem Oberbegriff der Patentansprüche 1 bzw. 6.

In der täglichen Kommunikation spielt der Brief eine wichtige Rolle. Trotz der weiteren Entwicklung moderner Kommunikationsmittel (z.B. Telefon, Telefax und e-Post) steigt die Zahl der Briefe und der Pakete. Der Abbau der Postmonopole macht eine Marktorientierung und damit auch eine Neuausrichtung des unternehmerischen Handelns der Postdienste unerläßlich, insbesondere eine stärkere Orientierung auf die Maximierung der Wirtschaftlichkeit der Postdienste und eine Effektivierung der Brief- und Paketbearbeitung.

Die Prozesse der Postbearbeitung (Annahme, Transport, Bearbeitung, Aushändigung) unterliegen sowohl systematischen als auch stochastischen Einflüssen hinsichtlich des Sendungsaufkommens und der Bearbeitungs- und Transportkapazitäten. Die Zahl der zur Bearbeitung eingelieferten Sendungen wird u.a. von starken zyklischen Schwankungen beeinflußt. Transport, und Bearbeitungsprozesse sind Störeinflüssen wie z.B. Ausfall von Maschinen oder zeitlichen Verzögerungen durch Witterungs- oder andere Umwelteinflüsse ausgesetzt. Gegenwärtig sind diese Prozesse bei den Postdiensten starr organisiert, d.h. für die Realisierung dieser Prozesse stehen fixe Zeitfenster und fixe Kapazitäten zur Verfügung. Bekannt sind lediglich dispositive Verfahren, bei denen der Zielknoten im Bedarfsfall über alternative Kanten erreicht werden kann, und Optimierungsalgorithmen hierfür, wie diese auch für eine Anwendung bei der Postzustellung im Patent US-A-5.068.797 von Sansone et al. beschrieben wurden. Es kann deshalb innerhalb des Postverkehrssystems nicht oder nur in begrenztem Umfang auf solche Einflüsse reagiert werden. Um bei dieser Organisationsform die Qualitätsanforderungen an die Bearbeitung von Sendungen, d.h. Einhaltung der Laufzeit, Gewährleistung der Sicherheit, Zuverlässigkeit etc., zu erfüllen, ist die Dimensionierung der Kapazitäten an den Verkehrsspitzen ausgerichtet. Diese Dimensionierung erfolgt anhand der oberen Toleranzgrenze der im Mittel zu bearbeitenden Sendungsmenge. Das hat zur Folge, daß Knoten und Kanten des Postlogistiknetzes, d.h. Bearbeitungspunkte bzw. Transportverbindungen für das in der Regel anfallende Sendungsaufkommen überdimensioniert sind.

Aufgabe der vorliegenden Erfindung ist es daher, ein Logistiknetz und ein Verfahren zur Steuerung eines Logistiknetzes anzugeben, mit dem der Sendungsfluß derart flexibilisiert wird, daß die für die Durchführung der Bearbeitungsprozesse notwendigen Ressourcen so an den tatsächlichen Bedarf angepaßt sind, daß Ressourcen-Überschüsse minimiert werden. Diese Aufgabe wird durch die Merkmale der Patentanspüche 1 und 6 gelöst. Weitere vorteilhafte Ausführugnsformen der Erfindung sind den Unteransprüchen und der Beschreibung zu entnehmen.

Die Erfindung ermöglicht es, Engpässe und daraus folgende Zeitverzögerungen bei der Sendungsbearbeitung zu vermeiden und eine Steuerung des Einsatzes wesentlicher Ressourcen des gesamten Versorgungsbereichs des betreffenden Postdienstes zu erreichen.

Im folgenden wird die Erfindung anhand von Zeichnungen genauer beschrieben. Dabei zeigen

Fig. 1          die Netzstruktur eines Postverkehrnetzes;

Fig. 2          einen Leitweg in einem Logistiknetz nach Fig. 1;

Fig. 2a          die Sendungsflüsse in einem Logistiknetz;

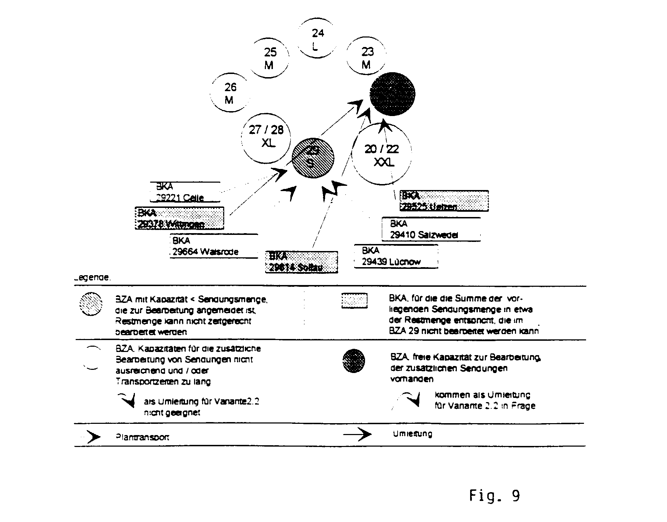

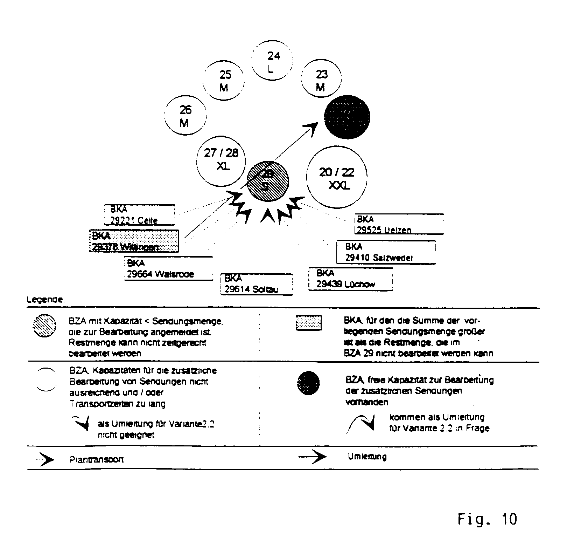

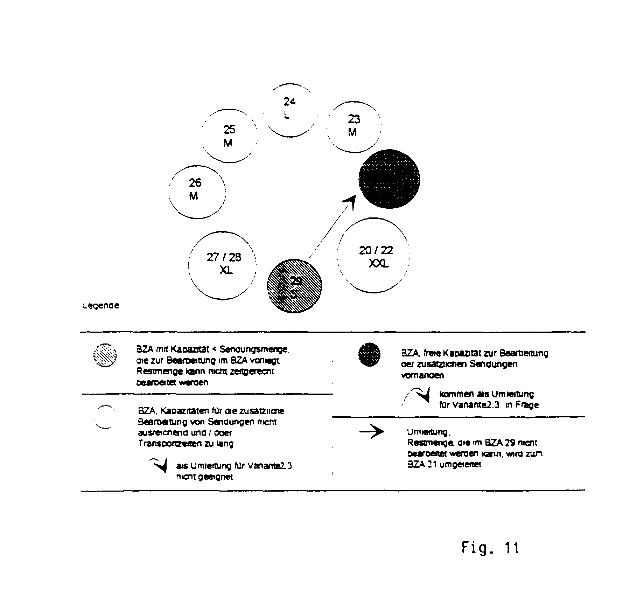

Fig. 3 - 11      verschiedene Verlagerungsmöglichkeiten auf der oberen und mittleren Netzebene.

Im folgenden wird von den unten angeführten Definitionen ausgegangen:

**Leitweg:**          Der Leitweg ist die temporal und lokal vorbestimmte Reihenfolge, in der die Knoten und Kanten eines Logistiknetzes Sendungen oder Transporteinheiten mit Sendungen übernehmen, bearbeiten und weiterleiten.
                      Für den Normalzustand des Systems wird ein Solleitweg definiert.

**Sendung:**          Sendungen sind von einem Absender an einen Empfänger gerichtet. Daraus ergibt sich der Weg der Sendung durch das Postlogistiknetz.

**Leitwegsteuerung:**  Die Leitwegsteuerung ist die gezielte Beeinflussung des Solleitweges entsprechend den Anforderungen des Logistiknetzes. Die Leitwegsteuerung sorgt für den Fluß der Sendungen durch das Logistiknetz und zwar so, daß minimale Zeitverluste bei Wartezeiten durch Stauungen und somit eine Einhaltung der Qualitätskenngröße Laufzeit bei minimalem Aufwand gewährleistet wird.

Eingangsgröße der Leitwegsteuerung ist dabei der Zustand des Systems, der durch die zu bearbeitenden Sendungsmengen, die dazu zur Verfügung stehenden Kapazitäten und das Zeitfenster für den Prozeß gekennzeichnet ist. Ausgangsgröße ist der gesteuerte Leitweg.

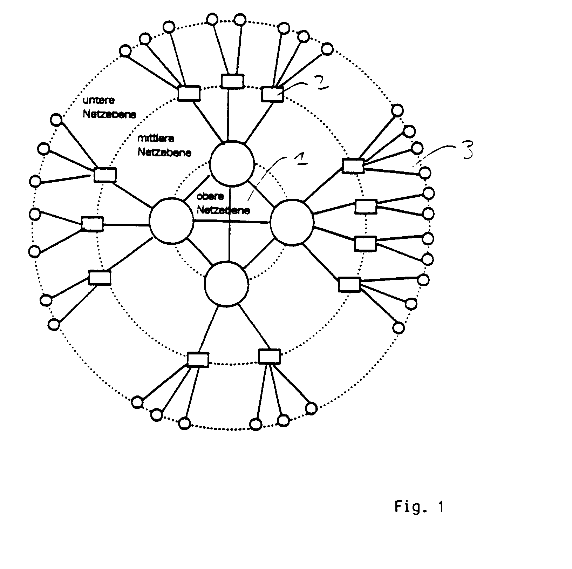

Fig. 1 zeigt die Struktur eines Postverkehrsnetzes.

Die Netzebenen sind dabei wie folgt abgegrenzt:

Die obere Netzebene 1 beinhaltet alle Prozesse, die zwischen dem Beginn der Abgangsbearbeitung in den Knoten der oberen Netzebene und dem Ende der Eingangsbearbeitung in den Knoten der oberen Netzebene liegen.

Die mittlere Netzebene umfaßt die Prozesse zwischen dem Bearbeitungsbeginn der Sendungen in den Knoten der mittleren Netzebene 2 und dem Eingang der Sendungen in den Knoten der oberen Netzebene für die Abgangsbearbeitung. Außerdem umfaßt die mittlere Netzebene alle Prozesse zwischen dem Ende der Eingangsbearbeitung in den Knoten der oberen Netzebene und dem Bearbeitungsende in den Knoten der mittleren Netzebene.

Die untere Netzebene 3 beinhaltet alle Prozesse zwischen- Einlieferung der Sendungen bis zum Eingang in den Knoten der mittleren Netzebene. Weiterhin behandelt die untere Netzebene alle Prozesse zwischen dem Bearbeitungsende der Sendungen in den Knoten der mittleren Netzeben bis zu deren Aushändigung.

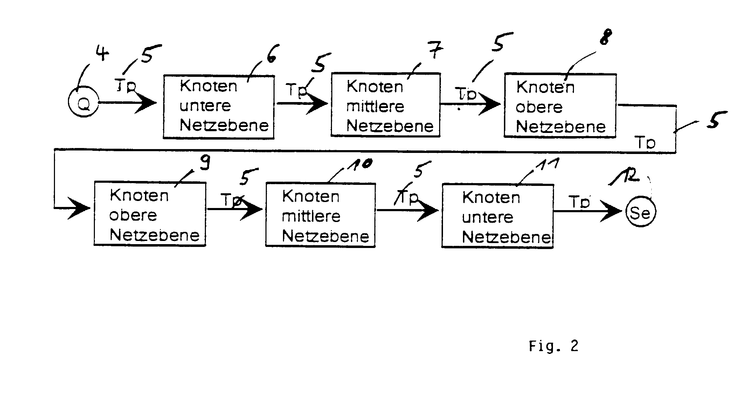

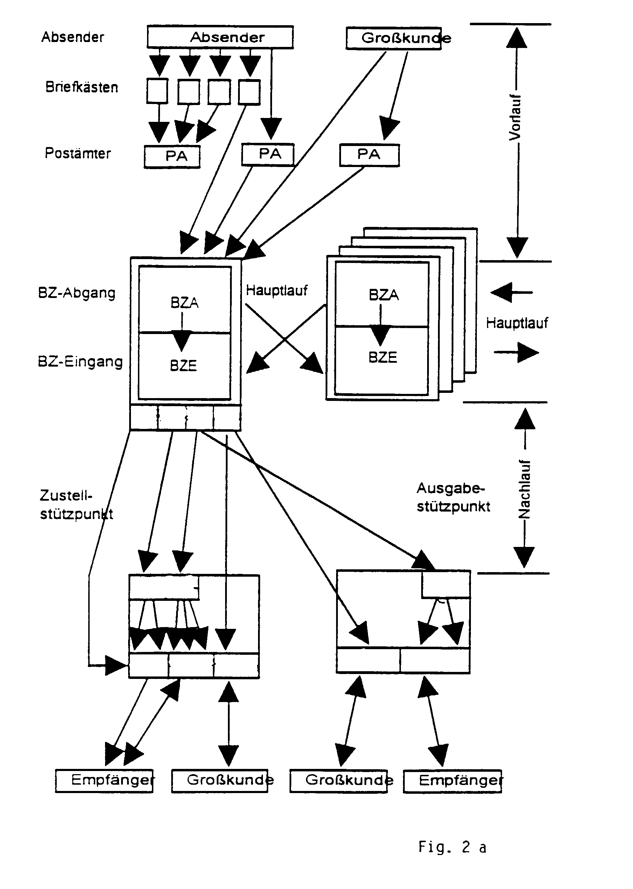

Fig. 2 zeigt die Aufteilung des Leitwegs in einem Logistiknetz gemäß Fig. 1. Ausgehend von einer Quelle 4 werden die Sendungen über Transportwege 5, Knoten der unteren Netzebene 6 gesandt und über weitere Transportwege 5 zu den Knoten der mittlern und oberen Netzebene 7, 8, und von diesen ausgehend über Knoten der oberen, mittleren und unteren Netzebene 9, 10, 11 zur Senke 12, d.h. dem Empfänger transportiert. Die Leitwegsteuerung kann auf jeden dieser Abschnitte eingreifen, d.h. den Leitweg des Sendungsstroms bzw. eines Teils davon steuern.

Ist z.B. die Kapazität eines Knotens der mittleren Ebene zu gering, um für alle in diesem Knoten zu bearbeitenden Sendungen die zeitlichen- und Qualitätsanforderungen zu erfüllen, dann soll die Bearbeitung eines Teils dieses Sendungsstromes in einem anderen Knoten erfolgen. Die Leitwegsteuerung analysiert das Postverkehrssystem auf die Notwendigkeit von Umleitungen hin. Bei Bedarf werden geeignete Umleitungen ausgewählt. Dazu ist es erforderlich den Ist-Zustand des Systems festzustellen, mittelfristig zu erwartende Systemzustände zu prognostizieren, Leitwegalternativen hinsichtlich ihrer Wirkungen zu beurteilen, Entscheidungen zu treffen und diese zu realisieren. Die Realisierung besteht in der Weitergabe von Informationen z.B. an Knoten, die Sendungen abweichend vom Soll-Leitwert weiterleiten sollen und daraus resultierend die Einleitung erforderlicher Maßnahmen. Außerdem ist eine Steuerung des Bearbeitungsumfangs in den einzelnen Knoten einzubeziehen. Bei Ausfall von Maschinen während der Bearbeitung muß entschieden werden, ob eine weitere Bearbeitung in einem anderen Knoten durchzuführen ist.

In Fig. 2a sind zur Verdeutlichung die Sendungsflüsse zwischen Quelle und Senke dargestellt. Der Sendungsfluß wird eingeteilt in Vor-, Haupt- und Nachlauf. Der Vorlauf beinhaltet alle Prozesse von der Annahme der Sendungen bis zum Eingang in das BZA, der Hauptlauf die Prozesse zwischen Eingang in das BZA und Ende der Bearbeitung in das BZE. Der Nachlauf beinhaltet die sich anschließenden Prozesse bis zum Eingang im Zustell- bzw. Ausgabestützpunkt.

Mit allen Steuerungsfunktionen ist eine Steuerung von Transport- und Bearbeitungskapazitäten sowie eine flexible Einsatzplanung des Personals verbunden.

Eine wichtige Voraussetzung dafür, daß eine Leitwegsteuerung erfolgreich eingesetzt werden kann und die erstrebten Effekte erzielt werden, ist die zentrale und sofortige Auswertung von Verkehrsmengen, aktuellen Kapazitäten und anderen Daten. Diesem Punkt der Datengewinnung und Auswertung kommt eine große Bedeutung zu, denn damit wird die Basis für eine optimale Entscheidung geschaffen.

Im folgenden wird die Erfindung am Beispiel eines Logistiknetzes mehrerer Netzebenen dargestellt. Speziell werden Steuerungsverfahren für die obere Netzebene und für die mittlere Netzebene dargestellt. In dieser Ebene gibt es Knoten zur Abgangs- und zur Eingangsbearbeitung.

Die Steuerung in der oberen Netzebene beeinflußt den Abschnitt des Leitweges der Postsendungen zwischen den Bearbeitungsknoten der oberen Netzebene, die die Abgangsbearbeitung, d.h. Formattrennen, Aufstellen, Stempeln, Codieren, Abgangssortieren, vornehmen und den Bearbeitungsknoten der oberen Netzebene, die die Eingangsbearbeitung, d.h. Eingangssortieren vornehmen. Die Knoten der oberen Netzebene für die Abgangsbearbeitung werden im folgenden mit KNA und die Knoten der oberen Netzebene für die Eingangsbearbeitung mit KNE bezeichnet.

Ein steuernder Eingriff erfolgt dann, wenn in einem Knoten für die Eingangsbearbeitung die vorhandene Kapazität nicht ausreicht, um die in diesem Knoten vorliegenden bzw. für den Knoten angemeldeten Sendungen zeit- und qualitätsgerecht zu bearbeiten. Das Ergebnis der Steuerung muß deshalb die Verlagerung der Funktionen dieses Knotens für die gesamte oder eine Teilmenge der Sendungen zu einem anderen Knoten der oberen Netzebene sein. Damit soll gewährleistet werden, die Qualitätsanforderungen für diese Sendungen zu erfüllen.

Die Steuerung in der mittleren Ebene beeinflußt den Leitweg zwischen den Knoten der mittleren Netzebene (im folgenden mit KNM bezeichnet) und den Knoten für die Abgangsbearbeitung der oberen Netzebene. Für den Fall, daß in einem KNA die Kapazität nicht ausreicht, um alle vorliegenden - und von den zugeordneten KNM zu erwartenden Sendungen zeitgerecht zu bearbeiten, ist eine Umleitung von Sendungen zu einem anderen Knoten Abgangsbearbeitung der oberen Netzebene notwendig.

## Steuerung in der oberen Netzebene

Unter Steuerung in der oberen Netzebene wird die Steuerung des Leitwegs zwischen den KNA und den KNE verstanden. Für diese Steuerung ist es insbesondere im Hinblick auf die Erfüllung von Zeitvorgaben bei der Bearbeitung notwendig, bei Bearbeitungsende in den KNA die Anzahl der für die einzelnen KNE vorliegenden Sendungen zu ermitteln. Dazu wird bei allen KNA abgefragt, wieviele Sendungen sie für welchen KNE zur Bearbeitung vorliegen haben.

Die Erfassung kann z.B. durch Auswertung von Maschinenprotokollen oder Zählung oder Wiegen der für die KNE vorliegenden Behälter und Multiplikation mit einem Faktor erfolgen. Außerdem müssen die in den KNE existierenden Rückstände berücksichtigt werden.

Für jeden KNE wird die ermittelte Sendungszahl mit der verfügbaren Kapazität verglichen. Dabei werden momentane Ausfälle nur dann berücksichtigt, wenn sie voraussichtlich länger als bis zum Beginn der Eingangsbearbeitung andauern und diese gravierend beschränken. Es wird beispielsweise angenommen, daß dies dann der Fall ist, wenn die Kapazität des Knotens länger als 1/2 h beschränkt ist. Desweiteren wird berücksichtigt, daß die Sendung zu unterschiedlichen Zeiten in den KNE eintreffen und dadurch eventuell Leerlaufzeiten bei der Bearbeitung entstehen. Übersteigt die Sendungsmenge die Kapazität um einen definierten Grenzwert $\varepsilon$, muß die Leitwegsteuerung eingreifen und einen Teil der Sendungsmenge zur Bearbeitung in einen anderen KNE umleiten. Die Knoten, für die das zutrifft, werden im folgenden mit $\text{KNE}_{krit}$ bezeichnet; die Sendungsmenge, um die die Kapazität überschritten wird heißt $\Delta\text{SMKNE}$. Die Berechnung der Umleitung erfolgt nach speziellen Algorithmen, von denen einer im Folgenden exemplarisch beschrieben wird.

Es wird die Möglichkeit vorausgesetzt, die Maschinenprogramme der FeinSortieranlagen in den KNE so umzustellen, daß die Eingangssortierung auch für andere als den eigenen Bereich vorgenommen werden kann. Ein weiterer Parameter, der bei der Steuerung in der oberen Netzebene zu berücksichtigen ist, ist die Anzahl der Sortierfächer oder Ausschleusungen der eingesetzten Sortieranlagen. Um eine reibungslose Eingangsbearbeitung der Sendungen zu gewährleisten, sollen für die Umleitung nur diejenigen KNE in Betracht kommen, die hinsichtlich der Anzahl der Sortierfächer oder Ausschleusungen kompatibel zum $\text{KNE}_{krit}$ sind. Diese Bedingung ist erfüllt, wenn:

$$\text{Fächeranzahl im KNE} \geq \text{Fächeranzahl im KNE}_{krit}$$

Bei der in verschiedenen Varianten realisierbaren Steuerung, von denen im Folgenden ausführlich nur eine vorgestellt wird, werden nach bestimmten Kriterien realisierbare Umleitungen ermittelt. Aus diesen Umleitungen wird für das $\text{KNE}_{krit}$ diejenige bestimmt, für die ein minimaler zusätzlicher Aufwand entsteht. Nachdem die Kapazität aller KNE überprüft und für die $\text{KNE}_{krit}$ eine Umleitung innerhalb des gesamten Logistiknetzes gewählt wurde, folgt die Kontrolle auf mehrmalige Auswahl eines Knotens als Ziel einer Umleitung. Wenn das der Fall ist, wird ermittelt, ob der betrachtete Knoten in der Lage ist, alle auf ihn umgeleiteten Sendung zusätzlich zu bearbeiten. Reicht seine Kapazität nicht aus, erfolgt aus den zuvor bestimmten Umleitungen die Auswahl derjenigen, die am effektivsten ist. Alle übrigen, auf diesen Knoten zielenden Umleitungen, werden nicht durchgeführt. Die Effektivitätsrate wird folgendermaßen ermittelt.

$$\nu = \frac{\text{Aufwand}}{\text{SM}_{Uml}}$$

Aufwand - der durch die Umleitung enstehende zusätzliche Aufwand

$\text{SM}_{Uml}$ - Sendungsmenge, die mit der betrachteten Umleitung umgeleitet wird.

Eine bevorzugte Variante der Steuerung des Leitweges von Sendung innerhalb der oberen Netzebene beinhaltet folgenden Algorithmus:

Es wird ein KNA gesucht, bei dem die für den $\text{KNE}_{krit}$ vorliegende Sendungsmenge bei Bearbeitungsende innerhalb eines definierten Intervalls liegt. Für die Festlegung dieses Intervalls gibt es verschiedene Möglichkeiten. Als sinnvoll wird hier eine Intervallgröße angesehen, die vom Umfang der umzuleitenden Sendungsmenge abhängt:

$$\tau_{gu}(\Delta\text{SMKNE}) \leq \text{Sdgs-menge für KNE}_{krit} \leq \tau_{go}(\Delta\text{SMKNE})$$

wobei

$$\tau_{gu} \approx \bar{x}\, n \left(\frac{\sqrt{4\,\bar{x}^{2-2b} - 1} + \lambda_{1-\gamma}}{\sqrt{4\,n\,\bar{x}^{2-2b} - 1} + \lambda_g}\right)^2$$

$$\tau_{go} \approx \bar{x}\, n \left(\frac{\sqrt{4\,\bar{x}^{2-2b} - 1} + \lambda_{\gamma}}{\sqrt{4\,n\,\bar{x}^{2-2b} - 1} + \lambda_{1-g}}\right)^2$$

| | |
|---|---|
| $\tau_{go}$ | - obere Toleranzgrenze |
| $\tau_{gu}$ - | untere Toleranzgrenze |
| x - | $\Delta$SMKNE (Anzahl umzuleitender Sdg) |
| n - | Stichprobenumfang (wird hier mit 10 angenommen) |
| b - | Streuungsparameter |
| $\lambda_g, \lambda_{\gamma}, \lambda_{1-g}, \lambda_{1-\gamma}$ - | Quantile der standardisierten Normalverteilung |

Wird ein KN gefunden, für den die oben genannte Voraussetzung erfüllt ist, wird dessen Kapazität ermittelt und überprüft, ob die Bearbeitung der Sendung in diesem Knoten erfolgen kann (im folgenden KNE, da dort die Eingangsbearbeitung erfolgt). Dazu wird kontrolliert, ob alle Sendungen für den eigenen Bereich bearbeitet werden können und zusätzlich freie Kapazitäten zur Verfügung stehen. Die freie Kapazität soll ausreichend sein, um alle im Abgangsspeicher für das $KNE_{krit}$ vorliegenden Sendungen bearbeiten zu können. Außerdem muß überprüft werden, ob die zur Verfügung stehende Zeit genügt, diese Sendungen nach der Eingangsbearbeitung in das $KNE_{krit}$ zur weiteren Bearbeitung zu transportieren, so daß die Sendungen zur planmäßigen Schlußzeit im $KNE_{krit}$ vorliegen. Dabei wird vorausgesetzt, daß die umgeleiteten Sendungen im KNE sofort, vor der Bearbeitung der Sendungen für den eigenen Bereich, bearbeitet werden. Um zu prüfen, ob die Zeit ausreicht, wird folgendermaßen vorgegangen:

1. Ermittlung einer Schlußzeit für die umgeleiteten Sdg im KNA

$$T_S(KNE) = T_{Sr} - t_{Tp\,KNE \rightarrow KNE(krit)} - t_V(KNE) - t_P$$

| | |
|---|---|
| $T_S(KNE)$ - | Schlußzeit im KNE |
| $T_{Sr}$ - | reguläre Schlußzeit im $KNE_{krit}$ |
| $t_{TpKNE \rightarrow KNE(krit)}$ - | Zeit für Transport zwischen KNE und $KNE_{krit}$ |
| $t_V$ - | Zeit für Versandfertigstellung im KNE |
| $t_P$ - | Pufferzeit |

Die Pufferzeit beinhaltet die Zeitanteile, die für Versandfertigstellung und Transport zusätzlich notwendig sind, z.B. Einarbeitung des Personals.

2. Abfrage, ob die Zeit bis zur ermittelten Schlußzeit für die Bearbeitung ausreicht

$$\text{Beginn der Bearbeitung} + \text{Anzahl der Sdgn für } KNE_{krit} \times t_b(KNE) \leq T_S(KNE)$$

$t_b(KNE)$ - mittlere Bearbeitungszeit im KNE

Ein KNE, das alle vorgenannten Bedingungen erfüllt, kann als Umleitung gewählt werden.

Da die Bearbeitung der Sendungen ein zeitkritischer Prozeß ist, erfolgt die Abfrage der KN, ob diese als Umleitung in Frage kommen, in der Reihenfolge größer werdender Transportzeiten zwischen dem Knoten und dem $KNE_{krit}$. Sobald für ein KNE entschieden wird, daß es zu der zusätzlichen Bearbeitung der umgeleiteten Sendung in der Lage ist, wird dieses als Umleitung der ersten Variante gewählt.

Der Vorteil dieser Variante der Verlegung von Bearbeitungsprozessen besteht darin, daß keine zusätzlichen Transporte benötigt werden. Der Transport zwischen den beiden durch die Leitwegsteuerung beeinflußten Knoten der oberen Netzebene wird lediglich zeitlich verlagert. Findet der Transport ohne Eingriff der Steuerung zwischen Abgangs- und Eingangsbearbeitung statt, erfolgt er jetzt nach der Eingangsbearbeitung der Sendung.

Als zusätzlicher Aufwand entsteht bei dieser Variante ein Fixwert $\kappa$, der im wesentlichen aus den Kosten für die Umstellung der Maschinenprogramme besteht.

**Steuerung in der mittleren Netzebene**

Unter Steuerung in der mittleren Netzebene wird die Steuerung des Leitweges zwischen den Knoten der mittleren Netzeben und den Knoten für die Abgangsbearbeitung der oberen Netzebene verstanden (siehe auch Fig. 1).

An den Tagen, an denen Sendungen in den KNA bearbeitet werden, findet i.d.R. mehr als ein Transport statt, um die Sendungen von den KNM den KNA zur Bearbeitung zuzuführen. Deshalb besteht die Möglichkeit, mehrmals am Tag steuernd einzugreifen. In den folgenden Ausführungen werden zwei Transporte am Tag angenommen.

Zu einem vereinbarten Zeitpunkt vor der Abfahrt der Transporte von den KNM zu den KNA wird die Sendungsmenge ermittelt, die in den KNM zur weiteren Bearbeitung in den KNA vorliegt. Existieren keine Zahlen über die aktuellen Sendungsmengen, kann hier auch mit prognostizierten Sendungszahlen gearbeitet werden. In die Sendungsmenge fließen auch die in den KNA vorliegenden Rückstände ein. Es gilt:

$$SMKNA = R_{KNA} + \sum_{i=1}^{m} SMKNM$$

m - Anzahl der dem KNA zugeordneten KNM

Es wird überprüft, ob die Kapazität der KNA ausreicht, diese Sendungsmenge zeit- und qualitätsgerecht zu bearbeiten. Dabei wird unter Berücksichtigung von gravierenden Ausfällen in den KNA und des Ankunftszeitpunktes der Sendung im KNA ermittelt, ob die zur Verfügung stehende Zeit zur vollständigen Bearbeitung der SMKNA ausreicht. Bei dem ersten stattfindenden Transport wird zuerst geprüft, ob die Sendungen bis zur Ankunft des ersten Fahrzeuges des zweiten Transportes bearbeitet werden können. Ist die Bearbeitung bis zu diesem Zeitpunkt voraussichtlich nicht abgeschlossen, wird daraufhin überprüft, ob die bis zur Schlußzeit verbleibende Zeit zur Bearbeitung der Sendungsmenge, die für den ganzen Tag erwartet wird, ausreicht. Für die Sendungsmenge des zweiten Transportes wird mit Prognosewerten gearbeitet. Übersteigt auch dann die Sendungsmenge die Kapazität des Knotens um den in Formel 1 definierten Grenzwert $\varepsilon$, wird versucht, einen Teil der Sendung zu einem anderen Knoten umzuleiten. Das gilt auch für den zweiten Transport, wenn das errechnete benötigte Bearbeitungsintervall über die Schlußzeit hinausgeht. Dabei wird nach verschiedenen Varianten verfahren, von denen eine ausgewählte im folgenden Abschnitt beschrieben wird.

Knoten, deren Kapazität zur zeitgerechten Bearbeitung nicht ausreicht, werden im folgenden analog $KNA_{krit}$ genannt und die Anzahl Sendungen, die über die Kapazität hinausgeht, heißt $\Delta SMKNA$.

Bei dieser Variante der Steuerung in der mittleren Netzebene werden die KNM gesucht, für die gilt:

$$\tau_{gu}(\Delta SMKNA) \leq SMKNM \leq \tau_{go}(\Delta SMKNA)$$

wobei $\tau_{gu}(\Delta SMKNA)$ die untere und $\tau_{go}(\Delta SMKNA)$ die obere Toleranzgrenze der umzuleitenden Sendungsmenge darstellt.

Für KNM, die diese Bedingung erfüllen, wird nach einer Umleitung für die in diesem Knoten vorliegenden Sendungen zu einem anderen KNA gesucht. Um ein solches zu finden, werden alle KNA in der Reihenfolge größer werdender Transportzeiten zwischen KNM und KNA auf ihre freien Kapazitäten und Einhaltung der Schlußzeiten überprüft. Für KNA, die als Umleitung in Frage kommen, muß gelten:

1. $\Delta K > SMKNM$

d.h. die freie Kapazität des KNA muß größer sein, als die im KNM vorliegende Sendungsmenge.

2. $Bearbeitungsende(KNA) - T_{TpKNM \rightarrow KNA} > SMKNM \times t_b(KNA)$ d.h. die Zeit, in der die Sendungen im KNA zur Bearbeitung bereitliegen muß größer als die benötigte Bearbeitungszeit sein.

Für eine solche Umleitung ergibt sich ein zusätzlicher Aufwand in Höhe von:

$$Aufwand = k_{Tp\ KNM \rightarrow KNA} - k_{Tp\ KNM \rightarrow KNA_{knt}}$$

Als Umleitung wird die Kombination eines KNM und eines KNA gewählt, für die der zusätzlich erforderliche Aufwand minimal wird.

Eine zusammenfassende Darstellung der Kapazitätsermittlung KNE zeigt folgendes Struktogramm:

## KAPAZITÄTSERMITTLUNG KNE

| | |
|---|---|
| T := Schichtbeginn | |
| Liegen im Knoten Maschinenausfälle mit einer Ausfalldauer voraussichtlich > 1/2 h vor ? | |
| A := 1 | A := 0 |
| t{b} {KNE[i]} := 1 / Q{Ausf} {KNE[i]} | t{b} {KNE[i]} := 1 / Q{KNE[i]} |
| Anzahl[i] := Sdgn des eigenen KNA + R{KNA[i]}   (Sdgn liegen bei Bearbeitungsbeginn im KNE vor) | |
| T := T + Anzahl[i] x t{b} {KNE[i]} | |
| für alle ankommenden Transporte in der Reihenfolge der Ankunft beim KNE[i]     (Laufindex j) | |

| T{Tp[j]} < T ? | |
|---|---|
| T := T + SM{Tp[j]} x t{b} {KNE[i]} | t{W} := t{W} + (T{Tp[j]} - T) |
| | T := T{Tp[j]} + SM{Tp[j]}x t{b} {KNE[i]} |

| | A = 1 |
|---|---|
| T >= T{Ausf} +   - t{Ausf Progn} | |
| t{b} {KNE[i]} := 1 / Q{KNE[i]} | % |
| A := 0 | |
| | % |

| T <= T{Sr} {KNE[i]} | |
|---|---|
| K[i] >= SMKNE[i] | K[i] < SMKNE[i] |
| Ermittlung der freien Kapazität | Ermittlung der umzuleitenden Sdgs-menge |
| - K = Q{KNE[i]} x ( 1 / t{W} + 1 / ( T{Sr} {KNE[i]} - T)) | - SMKNE[i] := (T - T{Sr} {KNE[i]} / t{b} |

Eine zusammenfassende Darstellung der Kapazitätsermittlung KNA zeigt folgendes Struktogramm:

KAPAZITÄTSERMITTLUNG KNA

| | | | |
|---|---|---|---|
| j   aktuelle Zeit > Schichtbeginn   n | | | |
| T := aktuelle Zeit | | T := Schichtbeginn | |
| j   Liegen im Knoten gravierende Maschinenausfälle vor?   n | | | |
| A := 1 | | A := 0 | |
| t{b} := 1 / Q{Ausf} {KNA[i]} | | t{b} := 1 / Q{KNA[i]} | |
| T := T + R[i] x t{b} | | | |
| für alle dem KNA[i] zugeordneten KNM in der Reihenfolge der Ankunft der Fahrzeuge beim KNA                    (Laufindex k) | | | |
| j   T{Tp Fzg[k]} < T   n | | | |
| T := T + SMKNM[k] x t{b} | | t{W} := t{W} + (T{Tp Fzg[k]} - T) | |
| | | T = T{Tp Fzg[k]} + SMKNM[k] x t{b} | |
| j   A = 1   n | | | |
| j   T >= T{Ausf} + — t{Ausf Progn}   n | | | |
| t{b} := 1 / Q{KNA[i]} | | % | % |
| A := 0 | | | |
| j   Handelt es sich um einen Fahrzeug des 1. Transportes ?   n | | | |
| j   T <= T{Tp (1. Fzg; 2. Tp)}   n | | j   T <= T{Sr} {KNE[i]}   n | |
| K[i] >= SMKNA[i] | T := T + SM{Progn 2. Tp} x t{b} | K[i] >= SMKNA[i] | K[i] < SMKNA[i] |
| freie Kapazität | j   T <= T{Sr} {KNE[i]}   n | — K[i] := Q{KNA[i]} x (1/ t{W} + 1 / (T{Sr}{KNE[i]} -T)) | — SMKNA := (T-T{Sr}) / t{b} |
| — K[i] := Q{KNA[i]} x (1/ t{W} + 1 / ( T{Tp(1.Fzg;2.Tp)} - T)) | K[i] = SMKNA[i] | K[i] < SMKNA[i] | | |
| | — K := 0 | — SMKNA := (T-T{Sr} / t{b} | | |

Wie bereits erwähnt, soll eine Umleitung von Sendungen zu einem anderen Knoten als dem des Solleitweges erst dann erfolgen, wenn die für den Knoten des Solleitweges zur Bearbeitung vorliegende Sendungsmenge dessen Kapazität um eine bestimmte Größe übersteigt. Ausgehend von der Erkenntnis, daß bei großen Verkehrswerten im Postdienst erlangverteilte Sendungsströme angenommen werden können, wird dieser Grenzwert für die weiteren Untersuchungen folgendermaßen definiert:

$$\varepsilon = 0.8\,x^b$$

wobei x - mittlerer Durchsatz des Knotens
b - Streuungsparameter des Sendungsstromes

Dabei muß für x die Zeit angegeben werden, die für die Bearbeitung von Sendungen zur Verfügung steht.

Beispiel:

Für einen Knoten der oberen Netzebene Abgangsbearbeitung ergibt sich folgender Grenzwert:

Q = 96.000 Sdgn/h
Zeitfenster für die Abgangsbearbeitung (14.$^{00}$ - 21.$^{00}$ Uhr) :
7 h
x = 672.000 Sdgn
b = 0,82
<u>ε = 48.000 Sdgn</u>

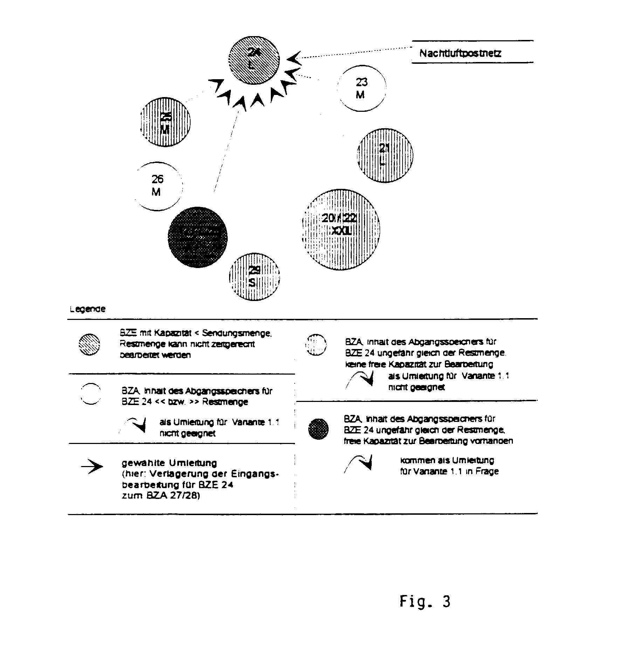

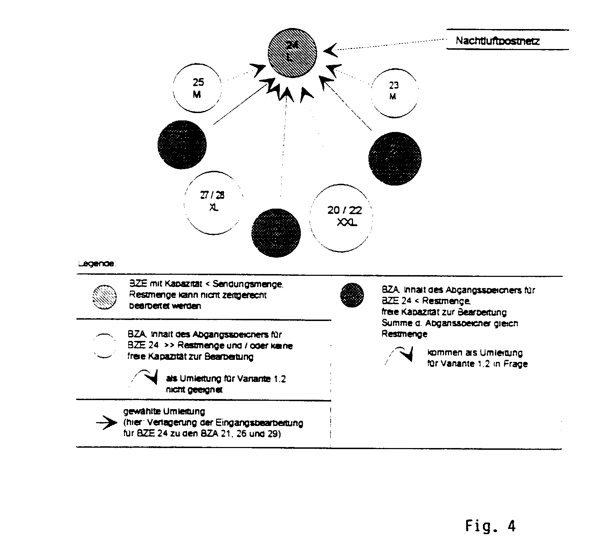

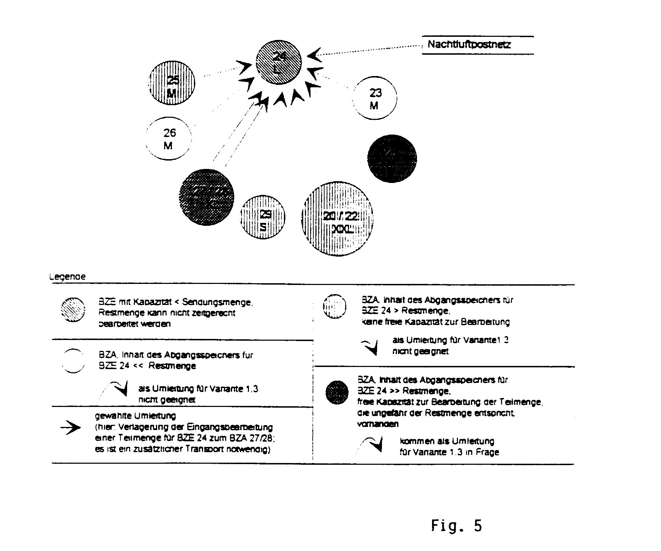

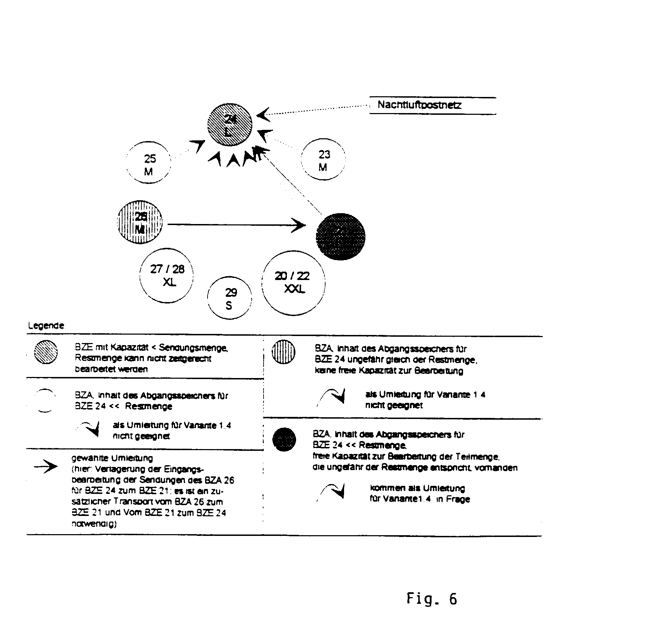

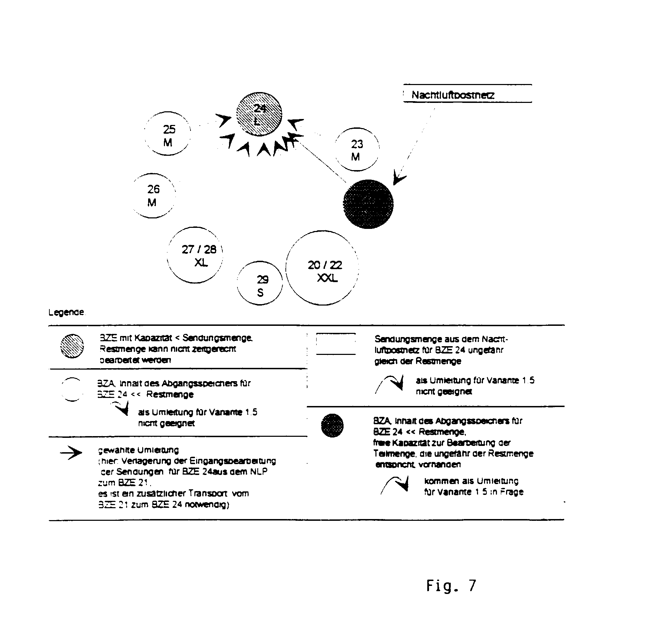

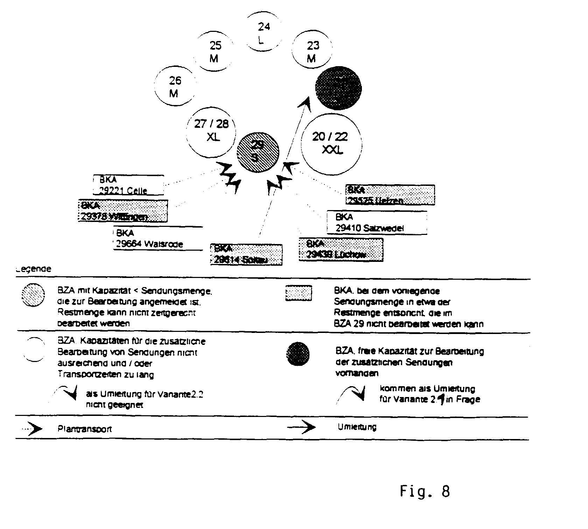

Neben diesen als Varianten 1.1 und 2.1 bezeichneten Verlagerungsmöglichkeiten auf der oberen und mittleren Netzebene gibt es weitere, die in der folgenden Aufstellung angeführt werden. Eine Veranschaulichung der Varianten 1.1 bis 1.5 zeigen die Figuren 3 bis 7; die Variante 2.1 wird in Figur 8 veranschaulicht.

# LEITWEGSTEUERUNG

## obere Netzebene

**Variante 1.1**
Eingangsbearbeitung aller in einem KNA für das KNE[krit] vorliegenden Sdgn in diesem KNA

**Variante 1.2**
Eingangsbearbeitung der Differenzmenge des KNE[krit] verteilt auf mehrere KNA; dort jeweils Bearbeitung aller im KNA für das KNE[krit] vorliegenden Sdgn

**Variante 1.3**
Eingangsbearbeitung der Differenzmenge des KNE[krit] in einem KNA; dort nur Bearbeitung einer Teilmenge der für das KNE[krit] vorliegenden Sdgn

**Variante 1.4**
Umleitung der für das KNE[krit] in einem KNA vorliegende Sdgn zu einem anderen KNA mit freien Kapazitäten; dort Eingangsbearbeitung

**Variante 1.5**
Umleitung der aus dem NLP für das KNE[krit] vorliegenden Sdgn zu einem KNA mit freien Kapazitäten; dort Eingangsbearbeitung

## mittlere Netzebene

**Variante 2.1**
Umleitung der Sdgn aller Sdgn eines Knoten der 2. Netzebene zu einem anderen als Stamm - KNA

**Variante 2.2**
Umleitung der Sdgn mehrere KNM zu einem anderen als Stamm-KNA

**Variante 2.3**
Umleitung einer Teilmenge eines KNM zu einem anderen als Stamm-KNA

**Variante 2.4**
Umleitung von Sdgn zu einem anderen als Stamm - KNA, wenn diese bereits im Stamm - KNA vorliegen und dann ein Kapazitätsausfall eintritt

**Variante 2.5**
Umleitung einer voneinem Großkunden angemeldeten Sendungsmenge zu anderem als Stamm - KNA

## STEUERUNG OBERE NETZEBENE

zur Schlußzeit der Bearbeitung von E+1-Post (21.00 Uhr) liegen in den Abgangsspeichern der KNA die Sdgn für die KNE vor

für alle KNE (Laufindex i)

Ermittlung der für das KNE[i] zur Bearbeitung vorliegenden Sendungsmenge

$SMKNEi = Ri + \sum_{alle\ KNA} Speicherinhalt\ AS[i]$

gehe zu KAPAZITATSERMITTLUNG KNE

$K[i] >= SMKNE[i]$      j      n

$\sum SMKNE[i] > \sum$      j      n

verfahre nach "Plan" (der definierte Sollleitweg wird eingehalten)

KNE[i] = KNE[krit]

gehe zu STEUERUNG OBERE NETZEBENE Variante 1.1

KNE[i] = KNE[krit]

wurde eine Umleitung für $\sum SMKNE[krit]$ gefunden ?      j      n

wähle Umleitung für die

Aufwand -> min.

Für die Sdgn konnte keine Umleitung gefunden werden. Der definierte Sollleitweg wird beibehalten.

verfahre nach "Plan" (der definierte Sollleitweg wird eingehalten)

wird ein KNE mehr als einmal als Umleitung gewählt ?      j      n

Bilde die Summe uber alle umzuleitenden Sdgn $\to \sum SM(Uml)$

gehe zu KAPAZITATSERMITTLUNG KNE

$\sum K >= \sum SM(Uml)$      j      n

Ermittlung der Schlußzeit:
$T\{S\} := T\{Sr\} - t\{Tp\ KNE -> KNE[krit]\} - t\{V\} - t\{P\}$

Werden alle Sdgn bis $T\{S\}$ bearbeitet ?      j      n

wähle Umleitung für die

$\to := Aufwand\ /\ SM(Uml)$

Es werden alle Umleitungen durchgeführt.

minimal wird

%

Information an betroffene Knoten

Aktualisierung des Datenmaterials

## STEUERUNG OBERE NETZEBENE - VARIANTE 1.1

Abfrage aller KNA außer KNE[krit] in der Reihenfolge größer werdender Transportzeiten zwischen KNA und KNE[krit]     (Laufindex k)

Kompatibilität KNE[krit] und KNE[k] ?

(Fächerzahl FSB !)     n

- {qu} <= Inhalt AS[krit] {KNA[k]} <=     - {qo}     n

gehe zu KAPAZITATSERMITTLUNG KNE

K[k] > SMKNE[k]?     n

- K[k] >= - SMKNE[krit] ?     n

Ermittlung der notwendigen Schlußzeit (Ende der Bearbeitung, damit die umgeleiteten Sdgn rechtzeitig im KNE[krit] für die weitere Bearbeitung vorliegen

$T\{S\}\ \{KNE[k]\} := T\{Sr\} - t\{tp\ KNE[k] \rightarrow KNE[krit]\} - t\{V\}\ \{KNE[k]\} - t\{P\}$

Schichtbeginn + Inhalt AS[krit] {KNA[k]} x t{b} {KNE[k]} <= T{S} {KNE[k]}     n     %

KNE[k] wird als Umleitung gewählt

Aufwand[k] :=     -

k := k + 1

bis eine Umleitung gefunden wird bzw. alle KNE abgefragt sind

gehe zu STEUERUNG OBERE NETZEBENE Variante 1.2

STEUERUNG OBERE NETZEBENE - VARIANTE 1.2

Abfrage aller KNA (außer KNE[krit]) in der Reihenfolge größer werdender Transportzeiten
zwischen KNA und KNE[krit]                    (Laufindex m )

Kompatibilität KNE[krit] und KNE[m]                    /n

Inhalt des AS[krit] {KNA[m]} <      -{qu}(    - SMKNE[krit])                    /n

gene zu  KAPAZITATSERMITTLUNG KNE

- K[m] > Inhalt AS[krit] {KNA[m]}                    /n

Ermittlung der notwendigen Schlußzeit:
T{S} {KNE[m]} := T{Sr} - t{Tp KNE[m] -> KNE[krit]) - t{V}{(KNE[m]} - t{P}

Schichtbeginn + Inhalt AS[krit] {KNA[m]} x t{b} {KNE[m]}
                    <= T{S} {KNE[m]}                    /n

SUMME := Inhalt AS[krit] {KNA[m]}                    (Hilfsvariable)

n := n + 1        (Setzen eines Zeigers auf das KNA, für das Transportzeit
                zum KNE[krit] am geringsten ist)

Kompatibilität KNE[krit] und KNE[n]                    /n

Inhalt des AS[krit] {KNA[n]} <      -{qu}(    -SMKNE[krit])                    /n

gehe zu  KAPAZITATSERMITTLUNG KNE

- K[n] > Inhalt AS[krit]{KNA[n]}                    /n

Ermittlung der notwendigen Schlußzeit:
T{S} {KNE[n]} := T{Sr} - t{Tp KNE[n] -> KNE[krit]) - t{V}{(KNE[n]}
                - t{P}                    %

Schichtbeginn + Inhalt AS[krit] {KNA[n]} x t{b} {KNE[n]}
                    <= T{S} {KNE[n]}                    /n

SUMME := SUMME + Inhalt AS[krit] {KNA[n]}                    %

Anzahl := Anzahl + 1                    (Hilfsvariable)

until    - [qu] <= SUMME <=        - [qo]

die KNA werden als Umleitung gewählt

Aufwand[n] := Anzahl x      -

Abfrage aller KNA (außer KNE[krit]) in der Reihenfolge größer werdender
Transportzeiten zwischen KNA und KNE[krit]                    (Laufindex n)

Abbruchbedingung: es wurden  alle KNA abgefragt bzw. es wurde eine
                Umleitung gefunden

wurde eine Umleitung gefunden ?                    /n

wähle die Umleitung mit  Aufwand -> min.                    %

gene zu STEUERUNG OBERE NETZEBENE Variante 1.3

## STEUERUNG OBERE NETZEBENE - VARIANTE 1.3

Abfrage aller KNA (außer KNE[krit]) in der Reihenfolge großer werdender Transportzeiten zwischen KNA und KNE[krit]        (Laufindex o )

Kompatibilität KNE[krit] und KNE [o]        n

Inhalt des AS[krit] {KNA[o]} >      - {qo)( − SMKNE[krit])        n

gehe zu KAPAZITATSERMITTLUNG KNE

0 <      − K[o] < Inhalt AS[krit] {KNA[o]}        n

− K[o] >=  − SMKNE[krit]        n

Ermittlung der notwendigen Schlußzeit:

$T\{S\} \{KNE[o]\} := T\{Sr\} - t\{Tp\ KNE[o] -> KNE[krit]\} - t\{V\} \{KNE[o]\} - t\{P\}$

Schichtbeginn +      − SMKNE[krit] x t{b} {KNE[o]}
<= T{S} {KNE[o]}        n      %

KNE[o] wird als Umleitung gewählt

− SMKNE - Sdgn werden im KNE[o] eingangsbearbeitet, die restlichen Sdgn des AS[krit] im KNA[o] werden entsprechend des Sollertweges transportiert und bearbeitet

$Aufwand[o] := k\{Tp\} \{KNE[o] -> KNE[krit]\} +$      −

wurde eine Umleitung gefunden ?        n

wähle die Umleitung mit Aufwand -> min.

gehe zu STEUERUNG OBERE NETZEBENE  Variante 1.4

## STEUERUNG OBERE NETZEBENE - VARIANTE 1.4

Abfrage aller KNA außer KNE[krit]          (Laufindex p)

- {qu} <= Inhalt AS{krit} {KNE[p]} <=        - {qo}

j                                                                                                    n

q := q + 1       (Setzen des Zeigers auf das KNA mit geringster Transportzeit
zum KNE[krit])

j                                          Kompatibilität KNE[krit] und KNE[q]          n

gene zu KAPAZITATSERMITTLUNG KNE

- K[k] >= Inhalt AS{krit} {KNE[p]}+ Inhalt AS{krit} {KNE[q]}

j                                                                                        n

| Ermittlung der notwendigen Schlußzeit: | - K >= Inhalt AS{krit} {KNE[p]} |
|---|---|
| T{S} {KNE[q]} := T{Sr} - t{Tp KNE[q] -> KNE[krit]} t{V} {KNE[q]} - t{P} | j                          n |
| T{Tp( KNE[p]->KNE[q]) + (Inhalt AS{krit} {KNA[p]}+Inhalt AS{krit}{KNE[q]}) x t{b} {KNE[q]} <= T{S} {KNE[q]} | Ermittlung der notwendigen Schlußzeit T{S} {KNE[q]} := T{Sr} - t{Tp KNE[q] -> KNE[krit]} - t{V} {KNE[q]} - t{P} |

j                                    n

| Umleitung der Sdgn des KNA[p] und des KNA[q] für KNE[krit] nach KNE[q]; dort Ein-gangsbearbeitung | T{Tp(KNE[p]->KNE[q]) + (Inhalt AS[krit]{KNA[p]} x t{b} {KNE[q]} <= T{S} {KNE[q]} | T{Tp(KNE[p]->KNE[q]) + Inhalt AS{krit} {KNA[p]} x t{b} {KNE[q]} <= T{S} {KNE[q]} |
|---|---|---|
| | j                     n | j                          n |
| Aufwand[q] := - | Umleitung der Sdgn des KNA[p] für KNE[krit] nach KNE[q]; dort Eingangsbear-beitung; Sdgn des KNA[q] für KNE[krit] werden ent-sprechend Sollleitweg transportiert und bear-beitet | Umleitung der Sdgn des KNA[p] für KNE[krit] nach KNE[q]; dort Eingangsbearbeitung Sdgn des KNA[q] für KNE[krit] werden entsprechend Soll-leitweg transportiert und bear-beitet |
| | Aufwand[q] := k{Tp} {KNE[q] -> KNE[krit]} + - | Aufwand[q] := k{Tp} {KNE[q] -> KNE[krit]} + - |

Abfrage aller KNA außer KNE[krit] in der Reihenfolge großer werdender Transportzeiten
zwischen KNA und KNE[krit]          (Laufindex q)

Abbruchbedingung:  es wurden alle KNA abgefragt bzw. es wurde eine Umleitung
gefunden

j                                          wurde eine Umleitung gefunden ?          n

wähle die Umleitung mit Aufwand -> min.

gene zu STEUERUNG OBERE NETZEBENE Variante 1.5

STEUERUNG OBERE NETZEBENE - VARIANTE 1.5

Abfrage aller KNE (außer KNE[krit], die am gleichen Flughafen des NLP angeschlossen
sind                    (Laufindex r)

Kompatibilität KNE[krit] und KNE[r]                                        n

gehe zu KAPAZITATSERMITTLUNG KNE

$- K >= - SMKNE[krit]$                                        n

Ermittlung der notwendigen Schlußzeit:

$T\{S\} \{KNE[r]\} := T\{Sr\} - t\{Tp KNE[r] -> KNE[krit]\} - t\{V\} \{KNE[r]\} - t\{P\}$

$T\{Tp( NLP->KNE[r])\}] + - SMKNE[krit] x t\{b\} \{KNE[r]\} <= T\{S\} \{KNE[r]\}$        n

KNE[r] wird als Umleitung gewählt:                                        %

$-$ SMKNE[krit] - Sdgn werden im KNE[r] eingangsbearbeitet und danach
    zum KNE[krit] transportiert

$Aufwand[r] := k\{Tp\} \{KNE[r] -> KNE[krit]\} + -$

wurde eine Umleitung gefunden ?                                        n

wähle die
Umleitung
mit
Aufwand -> min.

Abfrage aller KNE (außer KNE[krit], die an anderen Flughafen
des NLP angeschlossen sind                    (Laufindex s)

Kompatibilität KNE[krit] und KNE[s]                                        n

gehe zu KAPAZITATSERMITTLUNG KNE

$- K >= - SMKNE[krit]$                                        n

Ermittlung der notwendigen Schlußzeit:

$T\{S\} \{KNE[s]\} := T\{Sr\} - t\{Tp KNE[s] -> KNE[krit]\}$
$- t\{V\} \{KNE[s]\} - t\{P\}$

$T\{Tp(NLP->KNE[s])\} + - SMKNE x t\{b\} \{KNE[s]\}$
$<= T\{S\} \{KNE[s]\}$                                        n

KNE[s] wird als Umleitung gewählt                                        %

$Aufwand[s] := k\{Tp\} \{NLP -> KNE[s]\}$
$+ k\{Tp\} \{KNE[s] -> KNE[krit]\} + -$

wurde eine Umleitung gefunden ?                                        n

wähle die Umleitung mit Aufwand -> min.                                        %

gehe zu STEUEREUNG OBERE NETZEBENE

## STEUERUNG MITTLERE NETZEBENE

| fur alle KNA zum vereinbarten Zeitpunkt vor Abfahrt des Transportes von KNM zum KNA |
|---|

KAPAZITATSERMITTLUNG KNA

$K[i] >= SMKNA[i]$     j     n

verfahre nach "Plan" (der definierte Soll-leitweg wird eingehalten)

j    — SMKNA[i] > -    n

verfahre nach "Plan" (der definierte Soll-leitweg wird eingehalten)

KNA = KNA[krit]

gehe zu STEUERUNG MITTLERE NETZEBENE Variante 2.1

Wurde eine Umleitung gefunden ?    j    n

wahle Umleitung mit Aufwand -> min.

Fur die Sdgn konnte keine Umleitung gefunden werden. Der definierte Soll-leitweg wird beibehalten.

Wurde ein KNA mehrmals als Umleitung gewahlt ?    j    n

Bilde die Summe uber alle umzuleitenden Sdgn - — SM(Uml)

Kapazitatsermittlung KNA

j    — K >= — SM(Uml)    n    %

Werden alle Sdgn bis T{Sr} bearbeitet ?    j    n

wahle Umleitung fur die

Es werden alle Umleitungen durchgeführt.

— = Aufwand / SM(Uml)

minimal wird

Ausfall in einem KNA, wenn noch unbearbeitete Sdgn vorliegen    j    n

gehe zu STEUERUNG MITTLERE NETZEBENE Variante 2.4    %

Anmeldung einer Einlieferung eines GK    j    n

gehe zu STEUERUNG MITTLERE NETZEBENE Variante 2.5    %

Information an betroffene Knoten

Aktualisierung des Datenmaterials

STEUERUNG MITLLERE NETZEBENE - VARIANTE 2.1

für alle dem KNA(krit)zugeordneten KNM         (Laufindex K)

$- \{qu\}(- SMKNA) <= SMKNM[k] <= - \{qo\}(- SMKNA)$   n

für alle KNA         (Laufindex I)

gene zu KAPAZITATSERMITTLUNG KNA

$K[I] < SMKNA[I]$   n

$- K[I] >= SMKNM[k]$   n

1. Transport ?      n

| Ermittlung der Schlußzeit: | Ermittlung der Schlußzeit: | % |
|---|---|---|
| $T\{S\} := T\{Tp(1.Fzg\ 2.\ Tp)\}$ | $T\{S\} := T\{Sr\}$ | |

$T\{Tp(KNM[k]->KNA[I])\} + SMKNM[k] \times t\{b\}(KNA[I]) <= T\{S\}$   n

$Aufwand[k] := k\{Tp(KNM[k]->KNA[I])\} - k\{Tp(knm[k]->kna[krit])\}$

Wurde eine Umleitung gefunden ?   n

wähle die Umleitung mit Aufwand -> min.

gene zu STEUERUNG MITTLERE NETZEBENE Variante 2.2

STEUERUNG MITLLERE NETZEBENE - VARIANTE 2.2

fur alle dem KNA[krit] zugeordneten KNM　　　　　(Laufindex m)

SMKNM[m] < - {qu}( - SMKNA)　　n

SUMME := SMKNM[m]

SUMME = SUMME + SMKNM[n]

i := i + 1

Abfrage aller anderen dem KNA[krit] zugeordneten KNM　　　　(Laufindex n)

until - {qu}( - SMKNA) <= SUMME <= - {qo}( - SMKNA)

fur alle KNA　　　　(Laufindex o)

gehe zu KAPAZITATSERMITTLUNG KNA

K[o] < SMKNA[o]　　n

- K[o] >= SUMME　　n

1. Transport ?　　n　　%

Ermittlung der Schlußzeit:　　　　Ermittlung der Schlußzeit:
T{S} := T{Tp(1.Fzg 2. Tp)}　　　　T{S} := T{Sr}

for j = 1 to i　　　　(alle in die SUMME einbezogenen KNM)

T{Tp(KNM[j]->KNA[o])} + SMKNM[j] x t{b}(KNA[o]) <= T{S}　　n

Aufwand[o] := Aufwnd[o] + k{Tp(KNM[j]->KNA[o])} -
k{Tp(KNM[j]->KNA[krit])}

Wurde eine Umleitung gefunden ?　　n

wahle die Umleitung mit Aufwand -> min.

gehe zu STEUERUNG MITTLERE NETZEBENE Variante 2.3

STEUERUNG MITLLERE NETZEBENE - VARIANTE 2.3

für alle dem KNA[krit] zugeordneten KNM          (Laufindex p)

SMKNM[p] >  - (qo)(  - SMKNA)                                        n

für alle KNA                (Laufindex q)

gene zu KAPAZITATSERMITTLUNG KNA

K[q] > SMKNA[q]                                       n

- K[q] >= SMKNM[p]                                      n

1. Transport ?                                 n

- K[q] >=  - SMKNA                       n

Ermittlung der Schlußzeit:                    1. Transport ?            n

T{S} := T{Tp(1.Fzg 2. Tp)}   |   T{S} := T{Sr}      Ermittlung der Schlußzeit:

T{Tp(KNM[p]->KNA[q])} + SMKNM[p]              T{S} :=                    |   T{S} := T{Sr}
x t{b}(KNA[q]<= T{S}                          T{Tp(1.Fzg 2. Tp)}

                                        n    T{Tp(KNM[p]->KNA[q])} +
                                              - SMKNA x t{b}(KNA[q])          %
T{Tp(KNM[p]->KNA[q])} +                        <= T{S}
- SMKNA x t{b}(KNA[q])                                                n
<= T{S}
                                  n
Aufwand :=                                    Aufwand :=
k{Tp(KNM[p]                                   k{Tp(KNM[p]->KNA[q])}
->KNA[q])} -     Aufwand :=
k{Tp(KNM[p]      k{Tp(KNM[p]->KNA[q])}
->KNA[krit])}                          %

Wurde eine Umleitung gefunden ?                        n

wähle die Umleitung mit Aufwand -> min.

gene zurück zu STEUERUNG MITTLERE NETZEBENE

STEUERUNG MITLLERE NETZEBENE - VARIANTE 2.4

Maschinenausfall in einem KNA | n

Liegen im KNA noch unbearbeitete Sdgn vor ? | n

T := T{Ausf}

Ermittlung der Höhe des Kapazitätsausfalles:

K{Ausf} = $\quad$ – t{Ausf Progn} x Q

Q{Ausf} = (K{KNA} - K{Ausf}) / $\quad$ – t{Bearb)

t{b Ausf} := 1 / Q{Ausf}

SMKNA := Anzahl der unbearbeitet vorliegenden Sdgn

2. Transport bereits eingetroffen ?

T + SMKNA x t{b Ausf} <= T{Sr} | n | T := T + SMKNA x t{b Ausf}

| Sdgn bleiben im KNA und werden nach Behebung des Ausfalls bearbeitet | Ermittlung der Sdgs-menge, die nicht zeitgerecht bearbeitet werden kann:<br><br>– SMKNA := (T - T{Sr}) / t{b Ausf} | T < T{Tp (1.Fzg 2. Tp)} | n |
| | | % | T := T{Tp(1.Fzg 2.Tp)} |
| | | T + SM{Progn 2. Tp} x t{b Ausf} <= T{Sr} | n |

%

%

– SMKNA > $\quad$ – | n

fur alle KNA $\quad$ (Laufindex r)

gene zu KAPAZITATSERMITTLUNG KNA

K[r] > SMKNA[r] | n

– K[r] >= – SMKNA | n

T{Tp(KNA{krit]->KNA[r])} + $\quad$ –SMKNA x t{b}(KNA[r] < T{S} | n $\quad$ %

Aufwand := k{Tp(KNA{krit]->KNA[r])}

Wurde eine Umleitung gefunden ? | n

| wähle die Umleitung mit Aufwand -> min. | Die Sdgn konnen nicht umgeleitet werden. Der Solleitweg wird beibehalten. | Sdgn bleiben im KNA und werden nach Behebung des Ausfalls bearbeitet |

Information an betroffene Knoten

Berichtigung des Datenmaterials

## STEUERUNG MITLLERE NETZEBENE - VARIANTE 2.5

bei Anmeldung einer Einlieferung von Sdgn durch einen Großkunden unter
Angabe von:
- Einlieferungszeitpunkt
- Sendungsmenge SMGK

für Knoten der oberen Netzebene, bei dem die Sdgn des GK entsprechend
der Solleitweise bearbeitet werden

gehe zu KAPAZITATSERMITTLUNG KNA

$K[i] >= SMKNA[i]$                                                                    n

$- SMKNA[i] >$        -                                                        n

$KNA[krit] := KNA[i]$

Abfrage aller KNA  (außer KNA[krit])            (Laufindex k)

gehe zu KAPAZITATSERMITTLUNG KNA

$K[k] > SMKNA[k]$        n

$- K[k] >= SMGK$        n

$T\{S\} \{KNA[k]\} := T\{Sr (Infopost)\}$

$T\{Tp\ GK \to KNA[k] + SMGK \times t\{b\} \{KNA[k]\}$
$<= T\{S\} \{KNA[k]\}$        n

KNA[k] wird als Umleitung gewählt        %

$Aufwand\ [k] := k\{Tp\} \{GK \to KNE[k]\} - k\{Tp\} \{GK \to KNE[krit]\}$

wurde eine Umleitung gefunden        n

wähle die Umleitung mit        |        Die Sdgn können nicht umgeleitet werden.
Aufwand  -> min.        |        Es wird die Laufzeitreserve für
        |        Infopost genutzt.

Information an betroffene Knoten (GK, KNA[krit], KNA zu dem umgeleitet wird)

Berichtigung des Datenmaterials

*Einhaltung des definierten Solleitweges* (linke Randbeschriftung)

*Einhaltung des definierten Solleitweges* (rechte Randbeschriftung)

## Verzeichnis der Abkürzungen und Formelzeichen

$AS_i$        Abgangsspeicher mit Sdgn für Knoten i
b        Streuungsparameter
BZA        Briefzentrum Abgang

| | |
|---|---|
| BZE | Briefzentrum Eingang |
| E + 1 | Aushändigung am Tag nach der Einlieferung (Laufzeitangabe, typisch für Postsendungen) |
| K | Kapazität |
| $\Delta K$ | freie Kapazität |
| k | Parameter der Erlang-k-Verteilung |
| $k_{Tp}$ | Transportkosten, Anzahl der einem KNA zugeordneten KNM |
| KN | Knoten der oberen Netzebene |
| KNA | Knoten der oberen Netzebene für Abgangsbearbeitung |
| $KNA_{krit}$ | KNA mit Kapazität kleiner als zu bearbeitende Sendungsmenge |
| KNE | Knoten der oberen Netzebene Knoten |
| $KNE_{krit}$ | KNE mit Kapazität kleiner als zu bearbeitende Sendungsmenge |
| KNM | Knoten der mittleren Netzebene |
| LB | Leitbereich |
| m | Anzahl der einem KNA zugeordneten KNM |
| n | Stichprobenumfang, Anzahl von KN einer Umleitung |
| Q | Nenndurchsatz |
| $Q_{Ausf}$ | Durchsatz eines Knotens im gestörten Zustand |
| Qu | Quelle |
| R | Rückstände |
| Sdc | Sendungen |
| Se | Senke |
| $SM_{progn}$ | prognostizierte Sendungsmenge |
| $SM_{Tp}$ | Sendungsmenge eines Transportes |
| $SM_{Uml}$ | umgeleitete Sendungsmenge |
| SMKNA | Sendungsmenge, die im KNA zur Bearbeitung vorliegt |
| SMKNE | Sendungsmenge, die im KNE zur Bearbeitung vorliegt |
| SMKNM | Sendungsmenge, die in einem KNM für die weitere Bearbeitung in einem KNA bereitliegt |

$\Delta$SMKNA Sendungsmenge, die im KNA innerhalb des vorgegebenen Zeitfensters aufgrund der Kapazität nicht bearbeitet werden kann

$\Delta$SMKNE Sendungsmenge, die im KNE innerhalb des vorgegebenen Zeitfensters aufgrund der Kapazität nicht bearbeitet werden kann

| | |
|---|---|
| T | Zeitpunkt [h:min] |
| $T_{Ausf}$ | Ausfallzeitpunkt |
| $T_S$ | Schlußzeit |
| $T_{Sr}$ | reguläre Schlußzeit |
| $T_{Tp}$ | Ankunftszeit Transport |
| $T_{TpUml}$ | Ankunftszeit eines umgeleiteten Transportes |
| t | Zeit |
| $t_b$ | mittlere Bearbeitungszeit |
| $t_p$ | Pufferzeit |
| $t_{Tp}$ | Transportzeit |
| $t_V$ | Zeit zur Versandfertigstellung |
| $t_W$ | Wartezeit |
| $\Delta t_{Aust\,progn}$ | prognostizierte Ausfalldauer |
| $\Delta t_b$ | Zeitfenster für Bearbeitung |
| Tp | Transport |
| $\bar{x}$ | Mittelwert |
| $\varepsilon$ | Grenzwert |
| $\lambda$ | Parameter der Erlang-k-Verteilung |
| $\lambda_q, \lambda_\gamma, \lambda_{1-q}, \lambda_{1-\gamma}$ | Quantile der standardisierten Normalverteilung |
| $\kappa$ | Fixwert, Aufwand der bei Umleitung von Sdg in der oberen Netzebene entsteht (z.B. durch Umstellung der Maschinenprogramme der Feinsortieranlagen) |
| $\nu$ | Effektivitätsrate |
| $\tau_{go}$ | obere Toleranzgrenze |
| $\tau_{gu}$ | untere Toleranzgrenze |

**EP 0 724 490 B1**

**Patentansprüche**

1. Logistiknetz mit Kanten und Knoten, durch die eine Übernahme, Bearbeitung und Weiterleitung von Sendungen, die von einem Absender an einen Empfänger gerichtet sind, in temporal und lokal hierdurch vorgegebener Abfolge erfolgt, mit Vorrichtungen, um Abweichungen zwischen den Logistiknetzzustand beschreibenden Soll-Daten und gemessenen Ist-Daten festzustellen, bei dem die Verbindung zwischen den Knoten entsprechend der vorhandenen Transportkapazitäten optimiert wird,
**dadurch gekennzeichnet,** daß eine Steuerung vorgesehen ist, um die festgestellten Abweichungen durch Verlagerung der Bearbeitung von Sendungen von einem oder mehreren Knoten, deren Kapazität gegenüber den Soll-Daten reduziert ist, zu einem oder mehreren anderen Knoten derart zu minimieren und bestehende Zeitvorgaben einzuhalten, daß ein minimaler zusätzlicher Aufwand entsteht.

2. Logistiknetz nach Anspruch 1,
**dadurch gekennzeichnet,** daß eine Teilmenge der Knoten eine obere Netzebene bildet, wobei diese Knoten Vorrichtungen zur Eingangsbearbeitung sowie zur Abgangsbearbeitung von Sendungen aufweist.

3. Logistiknetz nach Anspruch 2,
**dadurch gekennzeichnet,** daß eine weitere Teilmenge von Knoten vorgesehen ist, die eine oder mehrere mittlere Netzebenen bilden.

4. Logistiknetz nach einem der Ansprüche 1 bis 3,
**dadurch gekennzeichnet,** daß es sich um ein Postlogistiknetz handelt, bei dem die Knoten Bearbeitungszentren oder Postämter und die Kanten Postverbindungen sind, deren durch lokale und temporale Beschreibung von Verkehrsquelle und -senke determinierte Abfolge einen Soll-Leitweg durch das Netz bestimmt.

5. Logistiknetz nach Anspruch 4, bei dem die Steuerung Daten der Netzstruktur, die relevanten Kapazitätsdaten der Kanten und Knoten und Daten über die zu bearbeitenden Sendungen, die sich in ermittelten Sendungsmengen und Sendungsströme strukturieren, als Eingangsdaten erhält,
**dadurch gekennzeichnet,** daß in der Steuerung die Eingangsdaten bei Überlast in einem oder mehreren Knoten so ausgewertet werden, daß unter Einhaltung festgelegter Sendungslaufzeiten bei minimalem Zusatzaufwand die überlasteten Bearbeitungsfunktionen dieser Knoten durch einen oder mehrere andere Knoten mindestens teilweise übernommen werden, unter der Voraussetzung, daß in dem die Bearbeitungsfunktion übernehmenden Knoten für den Zeitraum der Überlastung die notwendige freie Bearbeitungskapazität vorhanden ist und die benötigten zusätzlichen Transportkapazitäten bereitstehen.

6. Verfahren zur Steuerung eines Logistiknetzes mit Kanten und Knoten, durch die eine Übernahme, Bearbeitung und Weiterleitung von Sendungen, die von einem Absender an einen Empfänger gerichtet sind, in temporal und lokal hierdurch vorgegebener Abfolge erfolgt, wobei Abweichungen zwischen den Logistiknetzzustand beschreibenden Soll-Daten und gemessenen Ist-Daten ermittelt werden,
**dadurch gekennzeichnet,** daß eine Verlagerung der Bearbeitung von einem oder mehreren Knoten, deren Kapazität gegenüber den Soll-Daten reduziert ist, zu einem oder mehreren Knoten derart erfolgt, daß die Abweichungen minimiert und bestehende Zeitvorgaben eingehalten werden und ein minimaler zusätzlicher Aufwand entsteht.

7. Verfahren nach Anspruch 6,
**dadurch gekennzeichnet,** daß in einer Teilmenge der Knoten eine Eingangs- und Abgangsbearbeitung erfolgt und daß, wenn in einem Knoten für die Eingangsbearbeitung die vorhandene Kapazität nicht ausreicht, um die Soll-Daten dieses Knotens zu erreichen, eine Verlagerung der Eingangsbearbeitung zu einem oder mehreren anderen Knoten erfolgt.

8. Verfahren nach Anspruch 7,
**dadurch gekennzeichnet,** daß in einer Teilmenge der Knoten eine Eingangs- und Abgangsbearbeitung erfolgt und daß, wenn in einem Knoten für die Abgangsbearbeitung die vorhandene Kapazität nicht ausreicht, um die Soll-Daten dieses Knotens zu erreichen, eine Verlagerung der Abgangsbearbeitung zu einem oder mehreren anderen Knoten erfolgt.

9. Verfahren nach einem der Ansprüche 6 bis 8,
**dadurch gekennzeichnet,** daß eine Verlagerung der Bearbeitung von einem Knoten zu einem anderen erst dann erfolgt, wenn die zur Bearbeitung über diesen Knoten vorgesehene Menge von Sendungen die dort zur Verfügung stehende Kapazität um einen vorgegebenen Wert ε übersteigt.

10. Verfahren nach Anspruch 9,
**dadurch gekennzeichnet,** daß ε = 0,8 x$^b$, wobei x = mittlerer Durchsatz des Knotens und b = 0,75 bis 0,82 beträgt.

11. Verfahren nach einem der Ansprüche 6 bis 10,
**dadurch gekennzeichnet,** daß es sich um eine Leitwegsteuerung für ein Postlogistiknetz handelt, bei dem die Knoten Bearbeitungszentren oder Postämter und die Kanten Postverbindungen sind, deren durch lokale und temporale Beschreibung von Verkehrsquelle und -senke determinierte Abfolge einen Soll-Leitweg durch das Netz bestimmt.

12. Verfahren nach Anspruch 11,
**dadurch gekennzeichnet,** daß anhand von Daten der Netzstruktur, der relevanten Kapazitätsdaten der Kanten und Knoten und von Daten über die zu bearbeitenden Sendungen, die sich in ermittelten Sendungsmengen und Sendungsströme strukturieren, Überlastungen für Knoten ermittelt werden und bei Überlast in einem oder mehreren Knoten unter Einhaltung festgelegter Sendungslaufzeiten bei minimalem Zusatzaufwand die überlasteten Bearbeitungsfunktionen dieser Knoten durch einen oder mehrere andere Knoten mindestens teilweise übernommen werden, unter der Voraussetzung, daß in dem die Bearbeitungsfunktion übernehmenden Knoten für den Zeitraum der Überlastung die notwendige freie Bearbeitungskapazität vorhanden ist und die benötigten zusätzlichen Transportkapazitäten bereitstehen.

## Claims

1. Logistics network having edges and nodes through which despatches which are destined from a sender to a recipient are transferred, processed and passed on in a sequence which is predetermined in time and locally in this way, having apparatuses in order to detect discrepancies between nominal data which describe the logistics network state and measured actual data, in which logistics network the connection between the nodes is optimized in accordance with the existing transport capacities, characterized in that a control system is provided in order to minimize the detected discrepancies by moving the processing of despatches from one or more nodes whose capacity is reduced in comparison with the nominal data to one or more other nodes, and in order to comply with existing time requirements such that minimum additional effort is involved.

2. Logistics network according to Claim 1,
characterized in that a subset of the nodes forms an upper network level, wherein these nodes have apparatuses for input processing and output processing of despatches.

3. Logistics network according to Claim 2,
characterized in that a further subset of nodes is provided which form one or more middle network levels.

4. Logistics network according to one of Claims 1 to 3,
characterized in that this logistics network is a postal logistics network, in which the nodes are processing centres or post offices and the edges are postal connections whose sequence, which is determined by local and time description of the traffic source and destination, defines a nominal route through the network.

5. Logistics network according to Claim 4, in which the control system receives as input data data relating to the network structure, the relevant capacity data relating to the edges and nodes, and data relating to the despatches to be processed, which are structured in determined despatch quantities and despatch flows,
characterized in that, in the event of an overload in one or more nodes, the input data are evaluated in the control system such that, while complying with defined despatch throughput times, the overloaded processing functions of these nodes are at least partially taken over, with minimum additional effort, by one or more other nodes, subject to the precondition that the necessary free processing capacity is available for the time period of the overloading in the node taking over the processing function, and the required additional transport capacities are available.

6. Method for controlling a logistics network having edges and nodes through which despatches which are destined from a sender to a recipient are transferred, processed and passed on in a sequence which is predetermined in time and locally in this way, wherein discrepancies are determined between nominal data which describe the logistics network state and measured actual data,

characterized in that the processing is moved from one or more nodes whose capacity is reduced in comparison with the nominal data to one or more nodes in such a manner that the discrepancies are minimized and existing time requirements are complied with, and minimum additional effort is incurred.

**7.** Method according to Claim 6,
characterized in that input and output processing are carried out in a subset of the nodes and in that, if the existing capacity in one node is not sufficient to achieve the nominal data of this node for input processing, the input processing is moved to one or more other nodes.

**8.** Method according to Claim 7,
characterized in that input and output processing are carried out in a subset of the nodes and in that, if the existing capacity in one node is not sufficient to achieve the nominal data of this node for output processing, the output processing is moved to one or more other nodes.

**9.** Method according to one of Claims 6 to 8,
characterized in that the processing is moved from one node to another only if the quantity of despatches intended for processing via this node is greater by a predetermined value $\varepsilon$ than the capacity available there.

**10.** Method according to Claim 9,
characterized in that $\varepsilon = 0.8\, x^b$, where x = mean throughput of the node and b = 0.75 to 0.82.

**11.** Method according to one of Claims 6 to 10,
characterized in that this method comprises routing control for a postal logistics network, in which the nodes are processing centres or post offices, and the edges are postal connections whose sequence, which is determined by local and time description of the traffic source and destination, defines a nominal route through the network.

**12.** Method according to Claim 11,
characterized in that overloads for nodes are determined on the basis of data relating to the network structure, the relevant capacity data relating to the edges and nodes and data relating to the despatches which are to be processed and are structured in determined despatch quantities and despatch flows and, in the event of an overload in one or more nodes, while complying with defined despatch throughput times, the overloaded processing functions of these nodes are at least partially taken over, with minimum additional effort, by one or more other nodes, subject to the precondition that the necessary free processing capacity is available for the time period of the overloading in the node taking over the processing function, and the required additional transport capacities are available.

**Revendications**

**1.** Réseau logistique comportant des arêtes et des noeuds, au moyen desquels une prise en charge, un traitement et une retransmission d'envois qui sont adressés par un expéditeur à un destinataire s'effectuent dans un ordre ainsi prescrit temporellement et localement, avec des dispositifs pour détecter des écarts entre des données de consigne décrivant l'état de réseau logistique et des données réelles mesurées, dans lequel la liaison entre les noeuds est optimisée en fonction des capacités de transport existantes, caractérisé par le fait qu'il est prévu une commande pour minimiser les écarts détectés au moyen d'un déplacement du traitement d'envois depuis un ou plusieurs noeuds dont la capacité est réduite par rapport aux données de consigne vers un ou plusieurs autres noeuds et pour respecter des conditions temporelles prescrites de manière à n'engendrer qu'un coût supplémentaire minimal.

**2.** Réseau logistique selon la revendication 1, caractérisé par le fait qu'un sous-ensemble des noeuds forme un niveau de réseau supérieur, ces noeuds comportant des dispositifs pour le traitement d'arrivée ainsi que pour le traitement de départ des envois.

**3.** Réseau logistique selon la revendication 2, caractérisé par le fait qu'il est prévu un autre sous-ensemble de noeuds qui forment un ou plusieurs niveaux de réseau moyens.

**4.** Réseau logistique selon l'une des revendications 1 à 3, caractérisé par le fait qu'il s'agit d'un réseau logistique postal, dans lequel les noeuds sont des centres de traitement ou des bureaux de poste et les arêtes sont des liaisons postales dont la succession déterminée par une description locale et temporelle de sources de trafic et de collecteurs de trafic détermine un itinéraire de consigne à travers le réseau.

5. Réseau logistique selon la revendication 4, dans lequel la commande reçoit comme données d'entrée des données sur la structure du réseau, les données de capacité significatives des arêtes et des noeuds et des données concernant les envois à traiter qui sont structurés en quantités d'envois déterminées et en flux d'envois déterminés, caractérisé par le fait que, dans la commande, les données d'entrée en cas de surcharge dans un ou plusieurs noeuds sont évaluées de telle sorte que, en respectant des temps de transit d'envois fixés et avec un coût supplémentaire minimal, les fonctions de traitement surchargées de ces noeuds sont prises en charge au moins en partie par un ou plusieurs autres noeuds à la condition que, dans le noeud prenant en charge la fonction de traitement, la capacité de traitement libre nécessaire existe pour la durée de la surcharge et les capacités de transport supplémentaires nécessaires sont disponibles.

6. Procédé pour la commande d'un réseau logistique comportant des arêtes et des noeuds, au moyen desquels une prise en charge, un traitement et une retransmission d'envois qui sont adressés par un expéditeur à un destinataire s'effectuent dans un ordre ainsi prescrit temporellement et localement, des écarts entre des données de consigne décrivant l'état de réseau logistique et des données réelles mesurées étant déterminés, caractérisé par le fait qu'on effectue un déplacement du traitement d'un ou plusieurs noeuds dont la capacité est réduite par rapport aux données de consigne vers un ou plusieurs autres noeuds de telle sorte que les écarts sont minimisés et que des conditions temporelles prescrites sont respectées et qu'un coût supplémentaire minimal est engendré.

7. Procédé selon la revendication 6, caractérisé par le fait qu'on effectue dans un sous-ensemble des noeuds un traitement d'arrivée et de départ et que, si la capacité existante ne suffit pas dans un noeud pour le traitement d'arrivée pour atteindre les données de consigne de ce noeud, on effectue un déplacement du traitement d'arrivée vers un ou plusieurs autres noeuds.

8. Procédé selon la revendication 7, caractérisé par le fait qu'on effectue dans un sous-ensemble des noeuds un traitement d'arrivée et de départ et que, si la capacité existante ne suffit pas dans un noeud pour le traitement de départ pour atteindre les données de consigne de ce noeud, on effectue un déplacement du traitement de départ vers un ou plusieurs autres noeuds.

9. Procédé selon l'une des revendications 6 à 8, caractérisé par le fait qu'on effectue un déplacement du traitement d'un noeud vers un autre noeud seulement si la quantité d'envois prévue pour le traitement par l'intermédiaire de ce noeud dépasse la capacité disponible là d'une valeur $\varepsilon$ prescrite.

10. Procédé selon la revendication 9, caractérisé par le fait que $\varepsilon = 0,8\ x^b$, avec x = débit moyen du noeud et b = 0,75 à 0,82.

11. Procédé selon l'une des revendications 6 à 10, caractérisé par le fait qu'il s'agit d'une commande d'itinéraire pour un réseau logistique postal, dans lequel les noeuds sont des centres de traitement ou des bureaux de poste et les arêtes sont des liaisons postales dont la succession déterminée par une description locale et temporelle de sources de trafic et de collecteurs de trafic détermine un itinéraire de consigne à travers le réseau.

12. Procédé selon la revendication 11, caractérisé par le fait que, à l'aide des données de la structure du réseau, des données de capacité significatives des arêtes et des noeuds et de données concernant les envois à traiter qui sont structurés en quantités d'envois déterminées et en flux d'envois déterminés, on détecte des surcharges pour des noeuds et, en cas de surcharge dans un ou plusieurs noeuds, les fonctions de traitement surchargées de ces noeuds sont prises en charge au moins en partie par un ou plusieurs autres noeuds, en respectant des temps de transit d'envois fixés et avec un coût supplémentaire minimal, à la condition que, dans le noeud prenant en charge la fonction de traitement, la capacité de traitement libre nécessaire existe pour la durée de la surcharge et les capacités de transport supplémentaires nécessaires sont disponibles.

untere
Netzebene

mittlere
Netzebene

obere
Netzebene

Fig. 1

Fig. 2

Fig. 2 a

Fig. 3

Fig. 4

Fig. 5

Fig. 6

Fig. 7

Fig. 8

Fig. 9

Legende:

| | BZA mit Kapazität < Sendungsmenge. die zur Bearbeitung angemeldet ist. Restmenge kann nicht zeitgerecht bearbeitet werden | | BKA für den die Summe der vorliegenden Sendungsmenge größer ist als die Restmenge, die im BZA 29 nicht bearbeitet werden kann |
|---|---|---|---|
| | BZA Kapazitäten für die zusätzliche Bearbeitung von Sendungen nicht ausreichend und / oder Transportzeiten zu lang | | BZA freie Kapazität zur Bearbeitung der zusätzlichen Sendungen vorhanden |
| | als Umleitung für Variante2.2 nicht geeignet | | kommen als Umleitung für Variante 2.2 in Frage |
| | Plantransport | | Umleitung |

Fig. 10

Legende

| | BZA mit Kapazität < Sendungsmenge, die zur Bearbeitung im BZA vorliegt. Restmenge kann nicht zeitgerecht bearbeitet werden | | BZA, freie Kapazität zur Bearbeitung der zusätzlichen Sendungen vorhanden |
|---|---|---|---|
| | | | kommen als Umleitung für Variante2.3 in Frage |
| | BZA, Kapazitäten für die zusätzliche Bearbeitung von Sendungen nicht ausreichend und / oder Transportzeiten zu lang | | Umleitung. Restmenge, die im BZA 29 nicht bearbeitet werden kann, wird zum BZA 21 umgeleitet |
| | als Umleitung für Variante2.3 nicht geeignet | | |

Fig. 11